# EUROPEAN PATENT APPLICATION

(11) **EP 1 653 090 A2**
(43) Date of publication of application: **03.05.2006**
(21) Application number: 05380214.6
(22) Date of filing: 05.10.2005
(51) Int. Cl.: F16B 7/18

(54) **Device and clamp for coupling elements to guide rails**

(30) Priority: 27.10.2004 ES 200402579
(71) Applicant: Isofix, S.L., 08192 Sant Quirze Del Valles (ES)
(72) Inventor: Yanguas Llobet, David, 08192 Sant Quirze del Valles (ES)
(74) Representative: SUGRANES - VERDONCES - FERREGÜELA

(57) **Abstract**

The device for coupling elements to guide rails, these elements having a perforated hole and being suitable for screwing to the rail for fastening, is characterized in that it comprises a screw, adapted to the perforated hole of the element to be coupled and housed in said hole, some elastic means connected to the screw and a fastening bolt, screwed onto the screw, the base of which is essentially in the form of a parallelogram, all this adapted so that on pressing the head of the screw, it slides longitudinally in its axial direction, creating two housings between an end surface of the element to be coupled and the fastening bolt, adapted to receive the respective flaps of the guide rail, these flaps being held in the aforementioned housings via the effect of the elastic means upon the pressure on the head of the screw being removed.

## Description

### Technical field of the invention

The invention herein refers to a device for coupling elements to guide rails, said elements being those with a perforated hole and suitable for screwing to the guide rail for fastening.

The invention also refers to a clamp for coupling and fastening electrical conductions and pipes in parallel to guide rails, such as optical fibre installations, emergency cables or electrical panel installations. This type of clamp generally comprises a main body with a hole that passes through it horizontally and a screw running the length of said hole.

### Background of the invention

Many embodiments of clamps are currently known for coupling to vertical guide rails that have two wings opposite one another, each one finishing in a flap with the free ends folded inwards. This type of clamp comprises a main body adapted to receive the electrical conductions and with a hole which passes through it horizontally. Inside said hole, a screw is housed in the end of which, jutting out from the main body, a bolt is screwed. In order to use this type of clamp, it must be introduced via one of the ends of the guide rail in such a way that the bolt remains inside the guide rail separated from the main body of the clamp by the flaps of the guide rail. Once introduced, the clamp must be fixed in the guide rail by screwing the head of the screw until the flaps of the guide rail are pressed between the bolt and the main body of the clamp.

As mentioned, these clamps cannot be coupled to the guide rails by pressing from the front, since they can only be coupled laterally as they have to be introduced via one of the ends of the guide rail. This involves considerable problems when a new clamp has to be added between two other clamps positioned on the guide rail, since this means that all the clamps have to be unscrewed and slid from one of the sides along the inside of the rail until they are removed from the end of the rail to subsequently put them back on again after introducing the new clamp in the chosen point of assembly.

Another disadvantage lies in the need to tighten the screw in order to fix the clamp, even temporarily, to a determined point on the guide rail, because since we are dealing with a vertical guide rail, the clamps tend to fall due to their own weight if they are not screwed on.

In this way, the task of assembling the cabling of an installation is prolonged due to the large amount of screwing and unscrewing required to position and adjust the cabling that is to be secured between two clamps coupled to a vertical guide rail.

There is thus a notable lack of any clamp for electrical conductions and pipes in parallel which can be coupled at the front on any stretch of the vertical guide rail, which can be slid along the inside of the rail and kept immobilized in any stretch without the need to be screwed on until it is finally fastened, or of a device which enables the coupling of elements to a vertical guide rail in the same way.

### Explanation of the invention

The object of the invention herein is a device for coupling an element to be coupled to guide rails, in which said rails have two wings opposite one another, each one finishing in a flap or in a free end folded inwards. The device can be used for elements with a perforated hole and suitable for screwing to the guide rails for fastening.

In essence, the device described herein for coupling to guide rails is characterized in that it comprises a screw, adapted to the perforated hole of the element to be coupled and housed in said hole, some elastic means connected to the screw and a fastening bolt, screwed onto the screw, the base of which is essentially in the form of a parallelogram, all this adapted so that on pressing the head of the screw, the latter sliding longitudinally in its axial direction, creating two housings between an end surface of the element to be coupled and the fastening bolt, adapted to receive the respective flaps of the guide rail or the free edges folded inwards, these flaps or free edges being held in the aforementioned housings via the effect of the elastic means upon the pressure on the head of the screw being removed.

According to another characteristic of the invention, the fastening bolt has an anti-turning anchor whereby, on turning the element to be coupled the screw having slid longitudinally in its axial direction, or on turning the screw, the relative turn between the fastening bolt and the element to be coupled is restricted.

According to another aspect of the invention, the element to be coupled can house a slot for receiving the anti-turning anchor of the fastening bolt

In accordance with a preferred embodiment, the base of the fastening bolt is essentially in the form of a rhomboid parallelogram, the distance between the longest parallel sides of the rhomboid parallelogram being less than the distance between the ends of the flaps or less than the distance between the free edges of the guide rail, and the larger diagonal of the rhomboid parallelogram being slightly greater than the distance between the inner surfaces of the two wings opposite one another on the guide rail, configured in such a way so that upon introducing the fastening bolt in any stretch of the guide rail and on turning the element to be fastened in the forward direction of the screw and, consequently, the fastening bolt, it is able to turn until it reaches a coupling position in which the ends of the larger diagonal of the rhomboid parallelogram hit the inner surfaces of the two wings opposite one another on the guide rail, preventing the element to be coupled from continuing to turn in said direction, the longer sides of the rhomboid parallelepiped remaining in a position perpendicular to the longitudinal direction of the guide rail.

According to another characteristic of the invention, the fastening bolt comprises some grooves in the surface facing the element to be coupled, for anti-sliding purposes.

In accordance with another characteristic of the invention, the elastic means of the device for coupling to the guide rail comprise a spring positioned between the head of the screw and the element to be coupled.

According to another characteristic of the invention, the spring positioned between the head of the screw and the element to be secured is a conical spring.

Making use of the benefits of the device for coupling to guide rails, a description will also be given of a clamp for electrical conductions and pipes in parallel.

The clamp for electrical conductions and pipes in parallel being the object of the invention can be fixed to guide rails of the type that have two wings opposite one another, each one finishing in a flap or in a free end folded inwards. The aforementioned clamp is of the type that comprises a main body with a hole that passes through it horizontally and a screw running the length of said hole.

In essence, the clamp for electrical conductions and pipes in parallel is characterized in that it comprises a device for coupling the array to the guide rail, said device comprising some elastic means connected to the screw and a fastening bolt, screwed onto the screw, the base of which is essentially in the form of a parallelogram, all this adapted so that on pressing the head of the screw, the screw slides longitudinally in its axial direction, creating two housings between an end surface of the main body and the fastening bolt, adapted to receive the respective flaps or free edges of the guide rail, these flaps or free edges being held in the aforementioned housings via the effect of the elastic means upon the pressure on the head of the screw being removed.

According to another characteristic of the invention, the fastening bolt has an anti-turning anchor whereby, on turning the main body, the screw having slid longitudinally in its axial direction, or on turning the screw, the relative turn between the fastening bolt and the main body is restricted.

In accordance with another characteristic of the invention, the main body comprises a slot for receiving the anti-turning anchor of the fastening bolt.

In accordance with a preferred embodiment of the invention, the base of the fastening bolt is essentially in the form of a rhomboid parallelogram, the distance between the longest parallel sides of the rhomboid parallelogram being less than the distance between the free ends of the flaps or less than the distance between the free edges of the guide rail and the larger diagonal of the rhomboid parallelogram being slightly greater than the distance between the inner surfaces of the two wings opposite one another on the guide rail, configured in such a way so that upon introducing the fastening bolt in any stretch of the guide rail and on turning the main body in the forward direction of the screw and, consequently, the fastening bolt, the latter is able to turn until it reaches a coupling position in which the ends of the larger diagonal of the rhomboid parallelogram hit the inner surfaces of the two wings opposite one another on the guide rail, preventing the clamp from continuing to turn in said direction, the longer sides of the rhomboid parallelepiped remaining in a position perpendicular to the longitudinal direction of the guide rail.

According to another characteristic of the invention, the fastening bolt comprises some grooves in the surface facing the main body, for anti-sliding purposes.

In accordance with another characteristic of the invention, the elastic means of the device for coupling to the guide rail comprise a spring positioned between the head of the screw and the main body.

According to another characteristic of the invention, the spring positioned between the head of the screw and the main body is a conical spring.

### Brief description of the drawings

The attached drawing illustrate, as a non-restrictive example, a preferred form of embodiment of the clamp for electrical conductions and pipes in parallel and of the device for coupling to guide rails being the objects of the invention. In said drawings:
- Fig. 1,: is an elevational view of the device for coupling to guide rails according to the invention;
- Fig. 2: is a ground view of the fastening bolt;
- Fig. 3: is an elevational view of the device for coupling to guide rails applied to the base of a clamp;
- Fig. 4: is an elevational view of the device for coupling to guide rails applied to a metal clip; and
- Figs. 5, 6 and 7: are elevational views of the different sequences of the coupling of the clamp to the guide rail for electrical conductions and pipes in parallel according to the invention.

### Detailed description of the drawings

It is usual today to find guide rails positioned vertically for coupling various elements to them, such as clamps, clips and other auxiliary elements used in the installation of electrical conductions and pipes.

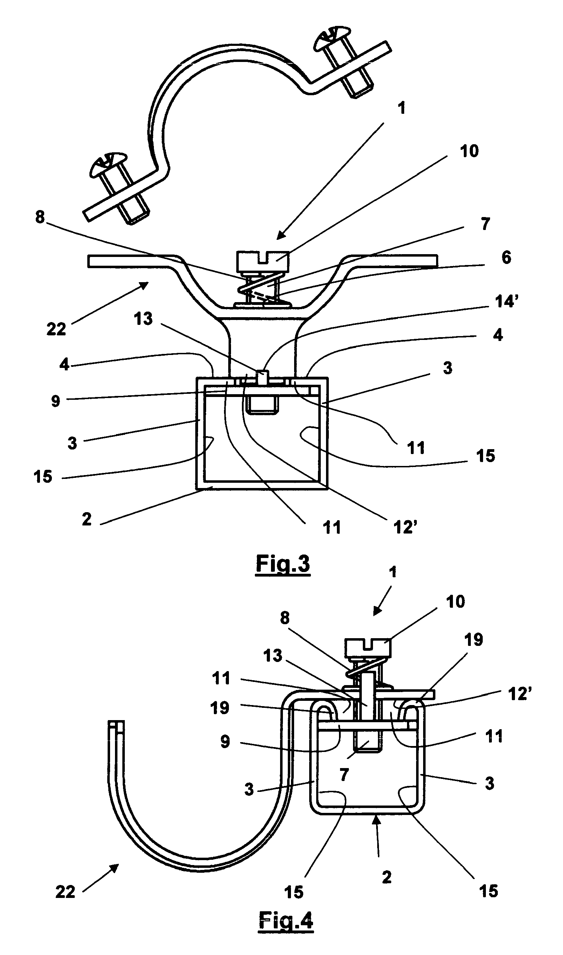

Guide rails 2 generally have two wings 3 opposite one another, each one finishing in a flap 4, normally perpendicular to the wings 3, and commonly called U-section rails, as shown in Figs. 3, 5, 6 and 7. In addition to this type of guide rail, rails also exist on the market which are called reinforced guide rails, in which the two wings 3 finish in free edges 19 which are folded inside the guide rail. The guide rail 2 represented in Fig. 4 corresponds to this type of reinforced guide rail, in which the free edges 19 folded inside the guide rail 2 are in a direction parallel to the wings 3 thereof. In this case, the transition of the wings 2 into the free edges 19 is represented as a curve, although it could also be the case that this transition is in a straight angle, which means that the flaps 4 in which the wings 3 of a U-section guide rail 2 finish, in turn finish in straight prolongations perpendicular to the flaps 4.

One of the disadvantages of vertical guide rails 2 is that in order to fix any element, even temporarily, it must be screwed to the rail 2 in order to prevent the element from sliding down the rail due to the effect of its own weight. In this way, if the position of the coupling element is to be adjusted, the element must be unscrewed, slid to the chosen position and screwed up again. In the specific case of wishing to couple a clamp of the type indicated to the guide rail 2 for electrical conduction and pipe installations in parallel, they can only be coupled to the rail by introducing them via one of the ends of the guide rail 2, with the disadvantages this entails if a clamp is to be replaced which is between two others or if another clamp has to be added to those already in position. The device 1 being the object of the invention provides a solution to the problems raised, as it enables elements 22 to be coupled to guide rails even though the latter are positioned vertically.

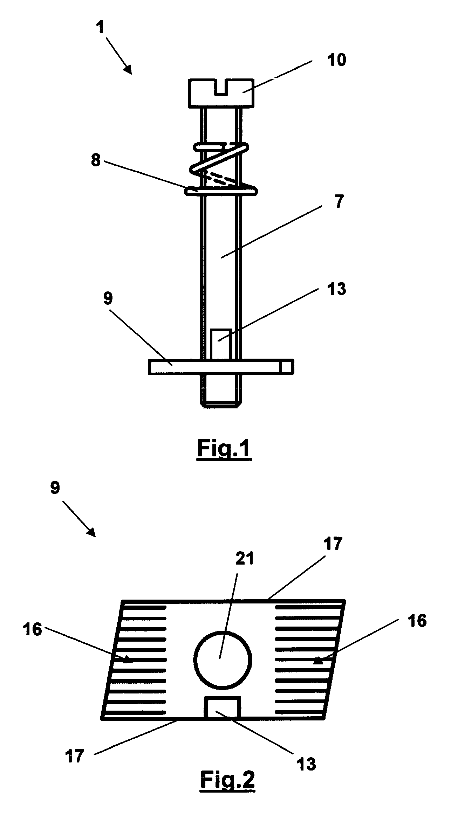

Fig. 1 shows one of the possible embodiments of the device 1 for coupling guide rails 2 according to the invention. As can be seen, the aforementioned device 1 comprises a screw 7, some elastic means 8 connected to the screw 7 and a fastening bolt 9, screwed onto the lower part of the screw 7 and the base of which is essentially in the form of a parallelogram. This device can be applied to all types of elements 22 that have a perforated hole 6 and which can be screwed to a guide rail 2 for fastening.

Fig. 3 shows an element 2, in this case a clamp base, coupled to a guide rail 2 via the device 1, while in Fig. 4, the element 22 coupled is a metal clip.

More specifically, the coupling of the clamp base represented in Fig. 3 is the result of introducing a screw 7 through the perforated hole 6 of said base. The screw 7 is itself connected to some elastic means 8 represented by a conical spring, and in its lower part a fastening bolt 9, essentially in the form of a parallelogram, is screwed. It is preferable that before coupling the element 22 to the guide rail 2, the fastening bolt 9 is screwed to the screw 7 in such a way that it makes contact with the end surface 12' of the element 22, i.e., with the clamp base.

The device 1 for coupling the clamp base works in the following way. As can be seen in Fig. 3, on exerting pressure on the head 10 of the screw 7, the conical spring is compressed, leaving the screw 7 to slide longitudinally in its axial direction, causing the fastening bolt 9, screwed to the lower part of the screw 7, to separate from the end surface 12' of the clamp base, creating two housings 11 between an end surface 12' of the element 22 to be coupled and the fastening bolt 9. These housings 11 are adapted to receive the flaps 4 of the guide rail. When the pressure on the head 10 of the screw 7 is removed, the conical spring is decompressed and the fastening bolt 9, due to the effect of the spring, moves back towards the end surface 12' of the clamp base, with the difference that now the flaps 4 of the guide rail are occupying the housings 11, these flaps 4 being held between the fastening bolt 9 and the end surface 12' of the clamp base.

In a similar way to that described in Fig. 3, the metal clip, or element 22, is coupled to the guide rail 2 with the free edges 19 of the guide rail 2 held in the housings 11 via the action of the elastic means 8 represented by a conical spring placed between the head 10 of the screw 7 and the element 22.

If the case arises that, once the clamp base or the metal clip are coupled to the guide rail 2, the user wishes to move them along the guide rail 2 to a new position, all that needs to be done is to press the head 10 of the screw 7 and slide the clamp base or metal clip, maintaining the pressure until it has reached the desired position.

As can be seen in Fig. 2, the base of the fastening screw 9 is essentially in the form of a rhomboid parallelogram and has a screw hole that corresponds with the threading of the screw 7 to which it is to be screwed, forming part of the device 1 for coupling elements to guide rails. It can be seen that in one of the sides of the rhomboid parallelogram, the fastening bolt 9 has an anti-turning anchor 13. This anti-turning anchor 13 can be fitted inside a slot 14' in the element 22 to be coupled, in such a way that if the screw 7 is slid longitudinally in its axial direction, or if the screw 7 is turned, the relative turn between the fastening bolt 9 and the element 22 to be coupled is restricted.

Another important characteristic are the grooves 16 in the surface of the fastening bolt 9 which face towards the head 10 of the screw 7. These grooves 16 have anti-sliding effects, so that at the time when the flaps 4 of the guide rail are held in the housings 11 between the end surface 12' of the element 22 and the fastening bolt 9, the coupled element 22 cannot be moved along the guide rail 2 unless pressure is exerted on the head 10 of the screw 7.

More specifically, the rhomboid parallelogram design of the fastening bolt 9 is such that the distance between the longest parallel sides 17 of the rhomboid parallelogram is less than the distance between the ends of the flaps 4, so that the bolt can be introduced into the guide rail 2 from the front. Another characteristic worth mentioning is that the larger diagonal of the rhomboid parallelogram is slightly greater than the distance between the inner surfaces 15 of the two wings 3 of the guide rail. In this way, on introducing the fastening bolt 9 in any stretch of the guide rail 2 and on turning the element 22 in the forward direction of the screw, and with this the fastening bolt 9, the fastening bolt can turn until it reaches a coupling position in which the ends of the larger diagonal of the rhomboid parallelogram hit the inner surfaces 15 of the two wings 3, thus preventing the element 22 from continuing to turn in said direction. At the moment at which the ends of the larger diagonal hit the inner surfaces 15 of the wings 3 of the guide rail 2, the longest sides 17 of the rhomboid parallelepiped remain inside the rail in a position perpendicular to the direction of the guide rail.

The coupling sequence initiated by introducing the body 22 to which the device 1 has been coupled in the guide rail, so that the longest parallel sides 17 of the fastening bolt 9 remain parallel to the groove in the guide rail 2 defined by the space between the two flaps 4. The head 10 of the screw 7 is subsequently pressed and the body of the element 22 is turned in the forward direction of the screw 7, until the flaps 4 of the guide rail 2 are situated in the housings 11 and the ends of the larger diagonal of the rhomboid parallelogram hit the inner faces 15 of the guide rail. Once this position has been reached, pressure from the head 10 of the screw 7 can now be removed so that the flaps 4 are held in the housings 11 via the effect of the elastic means 8, represented in the drawings as conical springs.

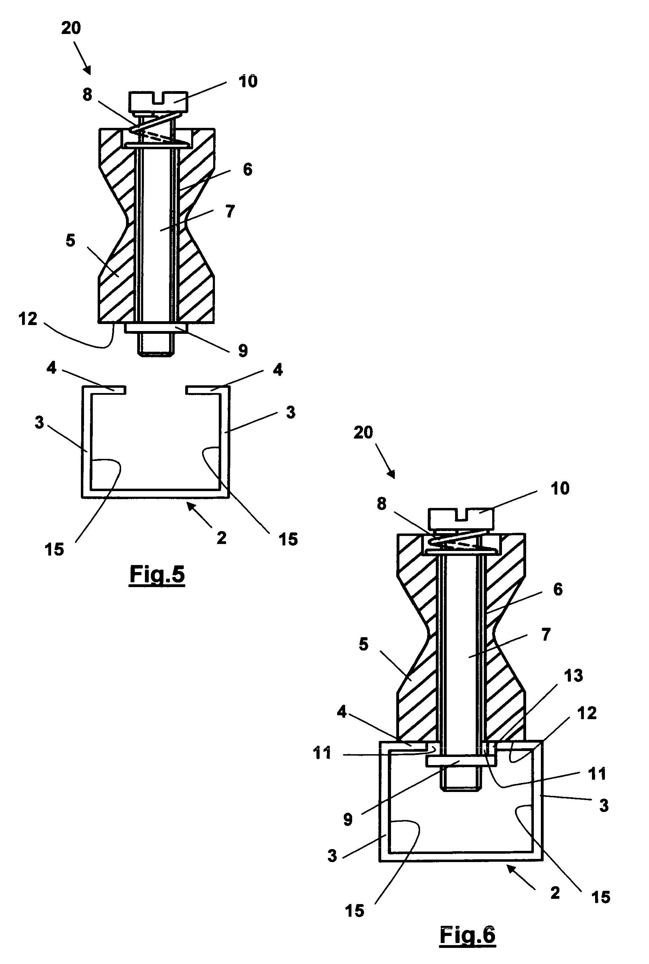

Originating from the benefits of the device 1 being the object of the invention is the clamp 20 for electrical conductions and pipes in parallel being the object of the invention. The clamp 20 is represented in Figs. 5, 6 and 7 and comprises a main body 5 with a hole 6 which passes through it horizontally, taking into account that the guide rail 2 is vertical, and by a screw 7 which runs the length of said hole 6. It comprises a device for coupling the array to the guide rail 2, with some elastic means 8 connected to the screw 7 and a fastening bolt 9, screwed onto the screw 7, the base of which is essentially in the form of a parallelogram, all this adapted so that on pressing the head 10 of the screw, the screw slides longitudinally in its axial direction, creating two housings 11 between an end surface 12 of the main body and the fastening bolt 9, adapted to receive the respective flaps 4 or free edges 19 of the guide rail 2, these flaps 4 or free edges 19 being held in the aforementioned housings 11 via the effect of the elastic means 8 upon the pressure on the head 10 of the screw 7 being removed.

The working procedure is the same as that described for the device 1 coupled to an element 22, with the difference that in this case, the element 22 is a clamp of the type used for electrical conductions and pipes in parallel, with a screw 7 passing through its main body 5.

In Fig. 5, the device which comprises the clamp 20 being the object of the invention is positioned so that the fastening bolt 9 is in contact with the end surface 12 of the main body 5, via the effect of the elastic means 8 which are slightly compressed between the head 10 of the screw 7 and the main body 5.

In Fig. 6, the clamp 20 in Fig. 5 is on the guide rail 2 and the head 10 of the screw 7 is being pressed. This fact can be seen by the separation that exists between the end surface 12 of the main body 5 and the fastening bolt 9 which forms two housings 11.

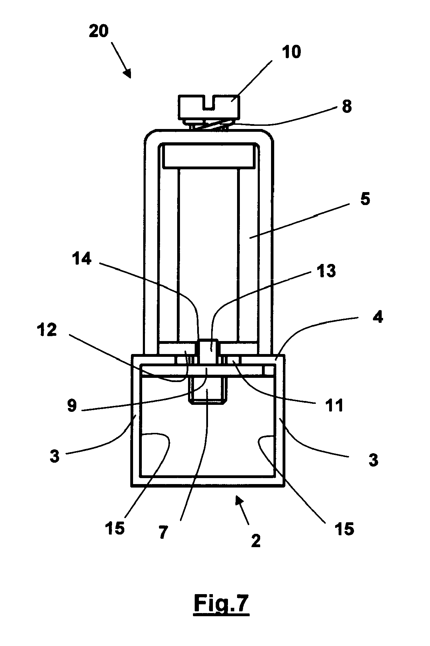

In order to couple the clamp 20 to the guide rail 2, all that needs to be done is turn the main body 5 or the screw 7 in the forward direction of the screw 7 itself until the fastening bolt 9 hits the inner surfaces 15 of the guide rail 2. At the time it hits, the pressure on the head 10 of the screw 7 must be removed, so that the flaps 4 are held in the housings 11 of the guide rail 2. Such a situation is represented in Fig. 7, in which it can be seen that the clamp 20 has remained coupled to the guide rail 2. As for the grooves 16 of the fastening bolt 9, they prevent any chance of the clamp 22 sliding inside the guide rail 2.

In Fig. 7 it can be seen that the main body 5 houses a slot 14 for receiving the anti-turning anchor 13 of the fastening bolt 9. Thanks to this anti-turning anchor 13, at the time it turns the main body 5, as represented in Fig. 6, the slot 14 turns the anti-turning anchor 13 in the same way causing, in the same measure, the fastening bolt 9 to turn until it is in the position represented in Fig. 7.

The design of the base of the fastening bolt 9 is of great utility since, in the coupling position, the longest parallel sides 17 remain perpendicular to the longitudinal direction of the guide rail. This fact, together with the existence of the anti-turning anchor 13, allows the main body 5 of the clamp 22 to be positioned from the outset, using as a reference the direction of these longest sides 17 of the parallelogram, so that upon the fastening bolt 9 hitting the inner surfaces 15, the clamp 22 remains sufficiently oriented for its function of fastening cables and pipes.

Lastly, if the clamp 22 is to be fastened to the guide rail 2 even more securely, the screw 7 can be screwed manually or by a machine, whereby the fastening bolt 7 will exert greater pressure on the flaps 4 of the guide rail.

## Claims

1. Device (1) for coupling to guide rails (2), said rails being of the type with two wings (3) opposite one another, each one finishing in a flap (4) or in a free edge (19) folded inwards, with elements (22) with a perforated hole (6) and suitable for screwing to a guide rail for fastening, **characterized in that** it comprises a screw (7), adapted to the perforated hole of the element to be coupled and housed in said hole, some elastic means (8) connected to the screw and a fastening bolt (9), screwed onto the screw, the base of which is essentially in the form of a parallelogram, all this adapted so that on pressing the head (10) of the screw, the latter slides longitudinally in its axial direction, creating two housings (11) between an end surface (12') of the element to be coupled and the fastening bolt, adapted to receive the respective flaps of the guide rail or the free edges folded inwards, these flaps or free edges being held in the aforementioned housings via the effect of the elastic means upon pressure from the head of the screw being removed.

2. Device (1) for coupling to guide rails (2) according to claim 1, **characterized in that** the fastening bolt (9) has an anti-turning anchor (13) whereby, on turning the element (22) to be coupled having slid the screw (7) longitudinally in its axial direction, or on turning the screw, the relative turn between the fastening bolt and the element to be coupled is restricted.

3. Device (1) for coupling to guide rails (2) according to claim 2, **characterized in that** the element (22) to be coupled can house a slot (14') to receive the anti-turning anchor (13) of the fastening bolt (9).

4. Device (1) for coupling to guide rails (2) according to claim 3, **characterized in that** the base of the fastening bolt (9) is essentially in the form of a rhomboid parallelogram, the distance between the longest parallel sides of the rhomboid parallelogram being less than the distance between the ends of the flaps (4) or less than the distance between the free edges (19) of the guide rail, and the larger diagonal of the rhomboid parallelogram being slightly greater than the distance between the inner surfaces (15) of the two wings (3) opposite one another on the guide rail, configured in such a way so that upon introducing the fastening bolt in any stretch of the guide rail and on turning the element (22) to be fastened in the forward direction of the screw and, consequently, the fastening bolt, it is able to turn until it reaches a coupling position in which the ends of the larger diagonal of the rhomboid parallelogram hit the inner surfaces (15) of the two wings (3) opposite one another on the guide rail, preventing the element to be coupled from continuing to turn in said direction, the longer sides of the rhomboid parallelepiped remaining in a position perpendicular to the longitudinal direction of the guide rail.

5. Device (1) for coupling to guide rails (2) according to any one of the previous claims, **characterized in that** the fastening bolt (9) comprises some grooves (16) in the surface facing the element (22) to be coupled with anti-sliding effects.

6. Device (1) for coupling to guide rails (2) according to any one of the previous claims, **characterized in that** the elastic means (8) of the device for coupling to the guide rail comprise a spring positioned between the head (10) of the screw (7) and the element (22) to be coupled.

7. Device (1) for coupling to guide rails (2) according to claim 6, **characterized in that** the spring positioned between the head (10) of the screw (7) and the element (22) to be coupled is a conical spring.

8. Clamp (20) for electrical conductions and pipes in parallel, that can be fixed to guide rails (2) of the type that have two wings (3) opposite one another, each one finishing in a flap (4) or in a free edge (19) folded inwards, comprising a main body (5) with a hole (6) which passes through it horizontally and a screw (7) running the length of said hole, **characterized in that** it comprises a device for coupling the array to the guide rail, with some elastic means (8) connected to the screw and a fastening bolt (9), screwed onto the screw, the base of which is essentially in the form of a parallelogram, all this adapted so that on pressing the head (10) of the screw, the screw slides longitudinally in its axial direction, creating two housings (11) between an end surface (12) of the main body and the fastening bolt, adapted to receive the respective flaps or free edges of the guide rail, these flaps or free edges being held in the aforementioned housings via the effect of the elastic means upon the pressure on the head of the screw being removed.

9. Clamp (20) for coupling electrical conductions and pipes in parallel according to claim 8, **characterized in that** the fastening bolt (9) has an anti-turning anchor (13) whereby, on turning the main body (5) having slid the screw (7) longitudinally in its axial direction, or on turning the screw, the relative turn between the fastening bolt and the main body is restricted.

10. Clamp (20) for electrical conductions and pipes in parallel according to claim 9, **characterized in that** the main body (5) comprises a slot (14) for receiving the anti-turning anchor (13) of the fastening bolt (9).

11. Clamp (20) for electrical conductions and pipes in parallel, according to claim 10, **characterized in that** the base of the fastening bolt (9) is essentially in the form of a rhomboid parallelogram, the distance between the longest parallel sides of the rhomboid parallelogram being less than the distance between the free ends of the flaps (4) or less than the distance between the free edges (19) of the guide rail, and the larger diagonal of the rhomboid parallelogram being slightly greater than the distance between the inner surfaces (15) of the two wings (3) opposite one another on the guide rail, configured in such a way so that upon introducing the fastening bolt in any stretch of the guide rail and on turning the main body in the forward direction of the screw (7) and, consequently, the fastening bolt, it is able to turn until it reaches a coupling position in which the ends of the larger diagonal of the rhomboid parallelogram hit the inner surfaces of the two wings opposite one another on the guide rail, preventing the clamp from continuing to turn in said direction, the longer sides of the rhomboid parallelepiped remaining in a position perpendicular to the longitudinal direction of the guide rail.

12. Clamp (20) for coupling electrical conductions and pipes in parallel according to any one of the previous claims, **characterized in that** the fastening bolt (9) comprises some grooves (16) in the surface facing the main body with anti-sliding effects.

13. Clamp (20) for electrical conductions and pipes in parallel according to any one of the previous claims, **characterized in that** the elastic means (8) of the device for coupling to the guide rail (2) comprise a spring positioned between the head (10) of the screw (7) and the main body (5).

14. Clamp (20) for electrical conductions and pipes in parallel according to claim 6, **characterized in that** the spring positioned between the head (10) of the screw (7) and the main body (5) is a conical spring.
